# EUROPÄISCHE PATENTSCHRIFT

(11) **EP 0 542 955 B1**
(45) Veröffentlichungstag und Bekanntmachung des Hinweises auf die Patenterteilung: **29.11.1995**
(21) Anmeldenummer: 92910835.5
(22) Anmeldetag: 04.06.1992
(51) Int. Cl.: H02P 7/622

(54) **LASTSTEUERUNGS-SCHALTUNG FÜR NETZBETRIEBENEN EINPHASEN-ASYNCHRON-KONDENSATOR-MOTOR**
LOAD-CONTROL CIRCUIT FOR A MAINS-POWERED ASYNCHRONOUS SINGLE-PHASE CAPACITOR MOTOR
CIRCUIT DE COMMANDE EN CHARGE POUR MOTEUR A CONDENSATEURS ASYNCHRONE MONOPHASE ALIMENTE PAR SECTEUR

(30) Priorität: 07.06.1991 CH 1697/91
(43) Veröffentlichungstag der Anmeldung: 26.05.1993
(73) Patentinhaber: Ascom Hasler Mailing Systems AG, CH-3018 Bern (CH)
(72) Erfinder: FLÜCKIGER, Daniel, CH-3512 Walkringen (CH)
(74) Vertreter: Schwerdtel, Eberhard, Dr.
(86) Internationale Anmeldenummer: CH9200107
(87) Internationale Veröffentlichungsnummer: WO9222126

(56) Entgegenhaltungen:
- EP-A- 0 031 688
- US-A- 4 992 709
- US-A- 5 017 853
- IEEE TRANSACTIONS ON INDUSTRY APPLICATIONS. Bd. 27, Nr. 1, Februar 1991, NEW YORK US Seiten 38 -43; T.A. LETTENMAIER ET AL: 'SINGLE-PHASE INDUCTION MOTOR WITH AN ELECTRONICALLY CONTROLLED CAPACITOR'

## Beschreibung

Die Erfindung betrifft eine Laststeuerungs-Schaltung für einen netzbetriebenen Einphasen-Asynchron-Kondensator-Motor entsprechend dem Oberbegriff von Anspruch 1. EP-A- 0 031 688 offenbart eine derartige Schaltung. Sie betrifft weiter die Verwendung einer derartigen Schaltung in einer Frankiermaschine.

Asynchron-Kondensator-Motoren, die am allgemeinen Einphasen-Netz (z.B. 220V, 50Hz) betrieben werden, sind allgemein bekannt und weit verbreitet. Sie sind preiswert, robust und arbeiten wartungsfrei. Neben ihren positiven Eigenschaften weisen sie aber auch Nachteile auf. Sie besitzen einen schlechten Wirkungsgrad, der im allgemeinen unter 50% liegt. Hierdurch entsteht stets eine relativ grosse Verlustleistung, die die Motorwicklungen bis zu kritischen Temperaturen von über 100°C erhitzen kann. Diese erhebliche Verlustleistung ist auch im Leerlauf des Motors gegeben.

Es ist weiter bekannt, dass Asynchron-Kondensator-Motoren beim Anlaufen aus dem Stillstand nur ein relativ geringes Anlaufmoment aufbringen. Zur Verbesserung dieser Eigenschaft kann dem Motor-Kondensator zum Anlaufen ein zusätzlicher Kondensator zugeschaltet werden.

Aus Hasler Review, Vol. 11 (1978), Nr. 1, S. 2-7 ist eine Frankiermaschine bekannt, die als Antrieb einen Asynchron-Kondensator-Motor aufweist. Dieser Motor läuft nach dem Einschalten der Maschine im wesentlichen im Leerlauf, wobei er die Einzugsrollen für die zu frankierenden Briefe antreibt. Sobald ein Brief frankiert werden soll, wird über eine Kupplung der Druckrotor der Maschine an den Motor angekuppelt und beschleunigt. Hierbei steigt die mechanische Belastung des Kondensator-Motors kurzzeitig erheblich an.

Die Arbeitsweise des Kondensator-Motors ist damit derart, dass er vorwiegend sehr gering belastet wird, um jeweils kurzfristig wesentlich stärker belastet zu werden. Hierbei ist die Stärke der Belastung noch von der Art der zu frankierenden Briefe abhängig, vor allem von deren Dicke, die zwischen weniger als 1 mm und etwa 8 mm schwanken kann.

Die Auslegung des Kondensator-Motors ist hierbei auf die Lastspitzen ausgerichtet, wodurch bei schwacher Belastung relativ ungünstige Arbeitsbedingungen resultieren, durch die die gesamte Frankiermaschine einer erheblichen Wärmebelastung ausgesetzt wird.

Es ist die Aufgabe der Erfindung, für eine Frankiermaschine mit ihrer besonderen Art der Motorbelastung einen allgemeinen Antriebsmotor anzugeben, der bei ähnlichen Kosten wie bisher wesentlich weniger Wärme erzeugt.

Die Lösung dieser Aufgabe ist durch den kennzeichnenden Teil der unabhängigen Ansprüche gegeben. Die abhängigen Ansprüche geben Ausgestaltungen der Erfindung an.

Im folgenden wird die Erfindung anhand von zwei Figuren beispielsweise näher beschrieben. Es zeigen:
Fig. 1 - Prinzip-Schaltbild einer Laststeuerungs-Schaltung
Fig. 2 - Detailliertes Schaltbild der Laststeuerungs-Schaltung.

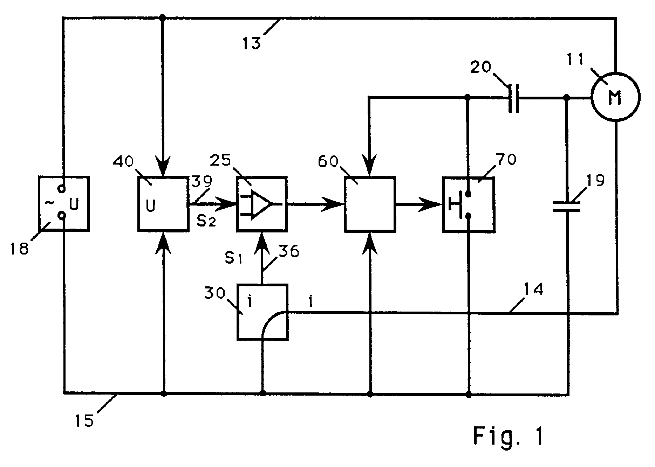

Fig. 1 zeigt das Prinzip-Schaltbild einer Laststeuerungs-Schaltung für einen netzbetriebenen Einphasen-Asynchron-Kondensator-Motor 11. Dieser Motor 11 ist beispielsweise 4-polig aufgebaut. Seine Hauptwicklungen sind über die Verbindungen 13, 14 sowie 15 an ein Einphasen-Wechselstromnetz der Norm 220V, 50Hz oder 110V, 60Hz angeschlossen, beispielsweise über einen Netzstecker 18. An der Nebenwicklung des Motors 11 ist ein erster Kondensator 19 angeschlossen, über den diese Wicklung mit der Verbindung 15 wechselstrommässig verbunden ist.

Die bis hierher beschriebene Anordnung entspricht einem allgemein bekannten Kondensator-Motor, wobei die Wicklungen des Motors 11 und der Kapazitätswert des ersten Kondensators 19 so aufeinander abgestimmt sind, dass sich auf den im wesentlichen unbelasteten Lauf des Motors 11 optimierte Verhältnisse ergeben, d.h. vor allem eine möglichst geringe Verlustleistung.

Es ist nun ein zweiter Kondensator 20 vorgesehen, der über eine Schalteranordnung 70 parallel zum ersten Kondensator 19 an den Motor 11 anschaltbar ist. Der Kapazitätswert beider Kondensatoren 19, 20 zusammen ist dabei so gewählt, dass der Motor 11 erhebliche, jedoch relativ kurzzeitige Lastspitzen problemlos bewältigen kann.

Die Laststeuerungs-Schaltung umfasst weiter einen Stromsensor 30, einen Spannungssensor 40, einen Komparator 25 mit Kipphysteresis und eine Schaltersteuerung 60.

Der Stromsensor 30 detektiert laufend die Stromstärke in der Verbindung 14, die der Stromstärke in der Hauptwicklung des Motors 11 entspricht. Er gibt weiter an seinem Ausgang 36 ein (erstes) Gleichspannungssignal S₁ ab, das dem Strom i proportional ist. Der Spannungssensor 40 detektiert parallel hierzu laufend die Netzspannung U und gibt an seinem Ausgang 39 ein zweites Gleichspannungssignal S₂ ab, das der Spannung U Proportional ist. Die beiden Gleichspannungssignale S₁, S₂ werden im Komparator 25 laufend verglichen. Sobald das erste Signal S₁ grösser als das zweite Signal S₂ wird, kippt der Komparator 25 aus seiner Ruhelage in seine Arbeitslage. Wird das zweite Signal S₂ wieder grösser als das erste Signal S₁, dann kippt er zurück in seine Ruhelage. Die Kipphysteresis wird dabei durch zwei geringfügig unterschiedliche Kippwerte erzeugt und verhindert ein eventuelles Oszillieren des Komparator 25 bei Gleichheit der beiden Signale S₁, S₂.

Die Schalteranordnung 70 ist bevorzugt als Halbleiterschalter ausgebildet, z.B. als Triac. Diesem Halbleiterschalter ist die Schaltersteuerung 60 vorgeschaltet, die eine Beschädigung des Schalters verhindert. Insbesondere sorgt die Schaltersteuerung 60 dafür, dass der Halbleiterschalter nur bei einem Nulldurchgang der Spannung eingeschaltet wird.

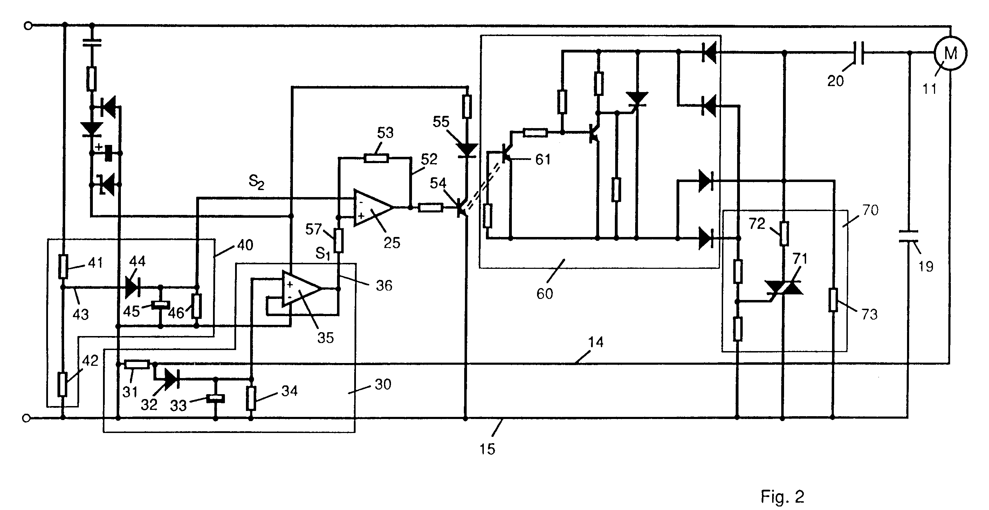

Fig. 2 zeigt das Schaltbild einer bevorzugten Ausführungsart der Laststeuerungs-Schaltung. Der Stromsensor 30 umfasst einen niederohmigen Messwiderstand 31, der in die Verbindung 14 eingefügt ist. Der Spannungsabfall an diesem Wiederstand 31 ist proportional zum Hauptwicklungsstrom des Motors 11, wird gleichgerichtet durch eine Diode 32 und geglättet durch einen Kondensator 33, dem ein hochohmiger Entladewiderstand 34 parallel geschaltet ist. Die entstehende Sensorspannung wird in einem Operationsverstärker 35 gepuffert und als erstes Gleichspannungssignal S₁ über die Verbindung 36 an den Plus-Eingang des Komparators 25 abgegeben. Die Diode 32 und der Kondensator 33 bilden hierbei, allgemein gesprochen, ein sehr einfaches Gleichrichter- und Siebglied.

Der Spannungssensor 40 umfasst einen Spannungsteiler aus zwei Widerständen 41, 42, der an die Verbindungen 13, 15 angeschlossen ist und an dessen Abgriff 43 eine Gleichrichterdiode 44 und ein Glättungskondensator 45 mit parallel geschaltetem Entladewiderstand 46 zur Bildung des zweiten Gleichspannungssignals S₂ angeschlossen ist.

Der Komparator 25 mit Kipphysteresis wird durch einen Operationsverstärker gebildet, der über einen Widerstand 53 von seinem Ausgang 52 zu seinem Plus-Eingang (+) rückgekoppelt und über einen weiteren Widerstand 57 mit dem Ausgang 36 des Stromsensors 30 verbunden ist. Durch diese Beschaltung entsteht die genannte Kipphysteresis und werden die Kippwerte eingestellt. Der Ausgang 52 des Komparators 25 steuert über einen Transistor 54 eine lichtemittierende Diode (LED) 55, die Bestandteil eines Optokopplers ist.

Der Optokoppler trennt die Kippschaltung 50 und die Schaltersteuerung 60 potentialmässig. Die Schaltersteuerung 60 hat die Aufgabe, den Schalter der Schalteranordnung 70 jeweils dann zu schalten, wenn der Fototransistor 61 des Optokopplers anspricht und der jeweils nächste Nulldurchgang der am Schalter anliegenden Spannung auftritt. Hierzu ist dem Fototransistor 61 eine Nullspannungs-Detektorschaltung nachgeschaltet, wie sie in "Thyristors & Triac Application Manual 1989" der Firma SGS-Thomson, Seite 57 ff beschrieben ist.

Die Schalteranordnung 70 umfasst als Schalter einen Triac 71, der durch die Schaltung 60 - wie oben beschrieben - bei einem Nulldurchgang der Wechselspannung eingeschaltet wird. Zur Sicherheit ist ein Widerstand 72 in Serie mit der Triac 71 geschaltet, der eventuell trotzdem auftretende Stromspitzen begrenzt. Parallel zum Widerstand 72 und dem Triac 71 ist ein spannungsabhängiger Widerstand (VDR) 73 geschaltet, der beim Unterbrechen des Triacs 71 eventuell auftretende Überspannungen begrenzt.

Die Laststeuerungs-Schaltung bildet zusammen mit dem Motor 11 eine preiswerte Lösung des aufgezeigten Problems. Sie sorgt für eine erhebliche Reduzierung der bisher gewohnten Verlustwärme, ohne dass entscheidende konstruktive Massnahmen an der Frankiermaschine notwendig sind. Mit der gleichzeitigen Messung des Motorstromes i und der Netzspannung U bietet sie eine stets sichere Unterscheidung zwischen unterschiedlichen Arbeitsbelastungen des Motors 11, unabhängig von Über- oder Unterspannungen am Netzstecker 18. Die unterschiedlichen Arbeitsbelastungen können dabei zum Beispiel "Leerlauf der Frankiermaschine" und "Antreiben des Druckrotors" sein. Bevorzugt wird jedoch die Unterscheidung zwischen "Leerlauf" und "Arbeitsbelastung durch ein dickes Kuvert". Letztere Belastung kann selbstverständlich nur bei Drehung des Druckrotors auftreten.

Die Laststeuerungs-Schaltung kann gegenüber der realen Schaltung von Fig. 2 in mannigfaltiger Art variiert werden, Anstelle des Triacs 71 können beispielsweise andere Halbleiterelemente verwendet werden, der Stromsensor 30 kann aufwendiger ausgebildet sein usw., wobei solche Ausgestaltungen im Schutzbereich der Ansprüche liegen.

## Patentansprüche

1. Laststeuerungs-Schaltung für einen Asynchron-Motor (11), der mit Hilfe eines ersten Kondensators (19) an einem Einphasen-Netz betrieben wird,
wobei ein zweiter Kondensator (20) vorgesehen ist, der dem ersten Kondensator (19) über einen Schalter (70) parallel zuschaltbar ist,
gekennzeichnet
- durch einen Stromsensor (30) zum laufenden Detektieren des Motorstromes (i) durch die Hauptwicklung des Motors (11) und zur Abgabe eines zu diesem Strom (i) proportionalen ersten Gleichspannungssignals (S₁),
- durch einen Spannungssensor (40) zum laufenden Detektieren der Netzspannung (U) und zur Abgabe eines zu dieser Spannung proportionalen zweiten Gleichspannungssignals (S₂),
- durch einen Komparator (25) mit Kipphysteresis zum laufenden Vergleichen des ersten (S₁) und des zweiten Gleichspannungssignals (S₂) und zum jeweiligen Abgeben eines Schaltsignals an den Schalter (70), solange das erste Signal (S₁) grösser als das zweite Signal (S₂) ist.

2. Laststeuerungs-Schaltung nach Anspruch 1,
dadurch gekennzeichnet,
dass der Stromsensor (30) ein Widerstand (31) und der Spannungssensor (40) ein Spannungsteiler (41, 42) sind, jeweils mit einem nachgeschaltetem Gleichrichter- und Siebglied (32-34; 44-46).

3. Laststeuerungs-Schaltung nach Anspruch 1,
dadurch gekennzeichnet,
dass eine Schaltersteuerung (60) vorgesehen ist, die, sobald ein Schaltsignal des Komparators (25) auftritt, beim nächstfolgenden Nulldurchgang der Spannung am Schalter (70) diesen einschaltet.

4. Laststeuerungs-Schaltung nach Anspruch 3,
dadurch gekennzeichnet,
dass ein Optokoppler (55, 61) vorgesehen ist, der zwischen den Komparator (25) und die Schaltsteuerung (60) zum Zwecke der Potentialtrennung eingefügt ist.

5. Verwendung einer Laststeuerungs-Schaltung nach Anspruch 1 in einer Frankiermaschine, die einen Asynchron-Motor (11) aufweist, der laufend an einem Einphasen-Netz betrieben wird und dem gesteuert und über eine Kupplung ein in Rotation zu versetzender Druckrotor ankoppelbar ist,
dadurch gekennzeichnet,
dass die Laststeuerungs-Schaltung so eingestellt ist, dass sie bei Drehung des Druckrotors und nur bei vergleichsweise besonders starker Belastung des Motors (11) den zweiten Kondensator (20) parallel zum ersten Kondensator (19) anschaltet.

## Claims

1. Load-control circuit for an asynchronous motor (11), wherein the motor is operated at a single-phase mains with aid of a first capacitor (19), and
wherein a second capacitor (20) is provided, being connectable in parallel to the first capacitor (19) by a switch (70),
characterized
by a current sensor (30) for continuously detecting the motor current (i) through the main winding of the motor (11) and for delivering of a first DC signal (S1) proportional to this current (i),
by a voltage sensor (40) for continuously detecting the mains voltage (U) and for delivering a second DC signal (S2) proportional to the mains voltage,
by a comparator (25) with relaxation hysteresis for continuously comparing the first DC signal (S₁) and the second DC signal (S₂) and for delivering in each case a switching signal at the switch (70), as long as the first DC signal (S₁) is larger than the second DC signal (S₂).

2. Load-control circuit according to claim 1, characterized in that
the current sensor (30) is a resistor (31) and the voltage sensor (40) a voltage divider (41, 42), both sensors succeeded by a rectifier and filtering device (32-34; 44-46).

3. Load-control circuit according to claim 1, characterized in that
a switch control unit (60) is provided which, as soon as a switching signal of the comparator (25) occurs, switches on the switch (70) at the next following zero passage of the AC voltage at said switch (70).

4. Load control circuit according to claim 3, characterized in that
an optical coupler (55, 61) is provided being inserted between the comparator (25) and the switching control unit (60) for purposes of voltage separation.

5. Use of a load-control circuit according to claim 1 in a postage metering machine, said postage metering machine including an asynchronous motor (11),
wherein the asynchronous motor (11) is operated continuously at a single-phase mains, and
wherein, for putting into rotation, a print rotor is coupleable to the asynchronous motor (11) controlled and by a coupling,
characterized in that
the load-control circuit is set such, that this circuit switches the second capacitor (20) parallel to the first capacitor (19) during rotation of the print rotor and only in case of a comparatively large load of the motor (11).

## Revendications

1. Circuit de commande en charge pour un moteur asynchrone (11) actionné à l'aide d'un premier condensateur (19) et alimenté par secteur monophasé,
pour lequel on a prévu un second condensateur (20) pouvant être branché parallèlement au premier condensateur (19) via un commutateur (70),
caractérisé
- par un détecteur de courant (30) permettant une détection continue du courant de moteur (i) passant par l'enroulement principal du moteur (11) et l'émission d'un premier signal de tension continue (S₁) proportionnel à ce courant (i),
- par un palpeur de tension (40) permettant une détection continue de la tension de secteur (U) et l'émission d'un second signal de tension continue (S₂) proportionnel à cette tension,
- par un comparateur (25) avec hystérésis de basculement permettant une comparaison continue entre le premier (S₁) et le second signal de tension continue (S₂) et pour l'émission correspondante d'un signal de commutation au commutateur (70) tant que le premier signal (S₁) est supérieur au second signal (S₂).

2. Circuit de commande en charge selon la revendication 1,
caractérisé en ce que
le détecteur de courant (30) est une résistance (31) et le palpeur de tension (40) un réducteur de tension (41, 42), chacun étant pourvu d'un élément de redressement et de filtrage placé en aval (32-34; 44-46).

3. Circuit de commande en charge selon la revendication 1,
caractérisé en ce qu'
on a prévu une commande de commutateur (60), laquelle déclenche le commutateur (70) lors du prochain passage à zéro de la tension dans celui-ci, dès qu'un signal de commutation du comparateur (25) arrive.

4. Circuit de commande en charge selon la revendication 3,
caractérisé en ce qu'
on a prévu un opto-coupleur (55, 61), lequel est placé entre le comparateur (25) et la commande de commutateur (60) à des fins de coupure de potentiel.

5. Utilisation d'un circuit de commande en charge selon la revendication 1 sur une machine à timbrer, laquelle est équipée d'un moteur asynchrone (11) alimenté en continu par secteur monophasé et auquel on peut coupler de manière régulée et au moyen d'un coupleur un rotor d'impression pouvant être mis en rotation,
caractérisée en ce que
le circuit de commande en charge est réglé de manière à déclencher le second condensateur (20) parallèlement au premier condensateur (19), lorsque le rotor effectue une rotation et seulement lorsque le moteur (11) est soumis à une charge comparativement très élevée.
